# EUROPEAN PATENT SPECIFICATION

(11) **EP 4 144 609 B1**
(45) Date of publication and mention of the grant of the patent: **14.08.2024**
(21) Application number: 20933307.9
(22) Date of filing: 27.04.2020
(51) Int. Cl.: B61C 17/12, F16F 15/08

(54) **ANTIVIBRATION SUPPORT STRUCTURE FOR VEHICLE-MOUNTED INSTRUMENT, AND VEHICLE-MOUNTED INSTRUMENT**
SCHWINGUNGSDÄMPFENDE STÜTZSTRUKTUR FÜR FAHRZEUGMONTIERTES INSTRUMENT UND FAHRZEUGMONTIERTES INSTRUMENT
STRUCTURE DE SUPPORT ANTI-VIBRATIONS POUR INSTRUMENT MONTÉ SUR VÉHICULE, ET INSTRUMENT MONTÉ SUR VÉHICULE

(43) Date of publication of application: 08.03.2023
(73) Proprietor: Mitsubishi Electric Corporation, Tokyo 100-8310 (JP)
(72) Inventor: HAYAMIZU, Shiki, Tokyo 100-8310 (JP)
(74) Representative: Witte, Weller & Partner Patentanwälte mbB
(86) International application number: PCT/JP2020/018006
(87) International publication number: WO 2021/220359

(56) References cited:
- EP-A1- 1 801 431
- JP-A- 2006 057 650
- JP-A- 2007 308 042
- JP-A- 2007 308 042
- JP-A- 2009 165 315
- JP-A- 2010 111 197
- JP-A- 2010 188 925
- JP-A- 2010 188 925
- JP-A- 2013 086 642
- JP-A- 2020 006 772
- JP-A- H01 315 192
- JP-A- H01 315 192

## Description

### TECHNICAL FIELD

The present disclosure relates to an anti-vibration support structure for an onboard device and an onboard device.

### BACKGROUND ART

An anti-vibration support structure for an onboard device is described in Japanese Patent Laying-Open No. 2020-6772 (PTL 1). The anti-vibration support structure for an onboard device disclosed in PTL 1 is an anti-vibration support structure for an onboard device of a railroad vehicle, and in this structure, an underfloor device is suspended from and held by a floor structure of the railroad vehicle. In this structure, anti-vibration rubber is used to hold the underfloor device. This structure fixes the underfloor device to the floor structure via suspension bolts. The underfloor device is supported by the suspension bolts. Suspension positions at which the suspension bolts are suspended are placed such that a suspension point load is uniformly applied to the suspension bolts.

### CITATION LIST

### PATENT LITERATURE

PTL 1: Japanese Patent Laying-Open No. 2020-6772

### SUMMARY OF INVENTION

### TECHNICAL PROBLEM

The anti-vibration support structure for an onboard device may include an elastic member such as anti-vibration rubber. As disclosed in PTL 1, however, a conventional anti-vibration support structure for an onboard device which includes the elastic member such as anti-vibration rubber may require a plurality of suspension bolts or require adjustment of a suspension point load. As a result, the conventional anti-vibration support structure for an onboard device has a complicated structure and is assembled in a complicated manner.

The present disclosure has been made in view of the above problem. An object of the present disclosure is to provide an anti-vibration support structure for an onboard device that can be simplified in terms of structure and assembly.

### SOLUTION TO PROBLEM

An anti-vibration support structure for an onboard device according to the present disclosure is for a vehicle to support an onboard device placed under a floor of the vehicle. The anti-vibration support structure for an onboard device includes a first support, a second support, a target support, a first elastic member, and a second elastic member. The first support is located under the floor of the vehicle and is fixed to the vehicle. The first support extends at least in part horizontally. The second support is located under the floor of the vehicle and is fixed to the vehicle. The second support is located above the first support while being apart from the first support. The target support is fixed to the onboard device. The target support is located at least in part between the first support and the second support so as not to be in contact with the first support and the second support. The first elastic member is located between the first support and the target support. The second elastic member is located between the second support and the target support. The target support is supported by being retained between the first support and the second support at least via the first elastic member and the second elastic member.

### ADVANTAGEOUS EFFECTS OF INVENTION

With the present disclosure, the target support is supported by the support via the elastic member without necessarily using a fastening member such as a bolt.

Thus, the anti-vibration support structure for an onboard device can have anti-vibration performance owing to the elastic member and be simplified in terms of structure and assembly.

### BRIEF DESCRIPTION OF DRAWINGS

Fig. 1 is a schematic side view of a vehicle and an onboard device supported by an anti-vibration support structure for an onboard device in an embodiment.
Fig. 2 is a schematic side view of the anti-vibration support structure for an onboard device according to the embodiment.
Fig. 3 is an enlarged side view showing a configuration of the anti-vibration support structure for an onboard device according to the embodiment.
Fig. 4 is a plan view showing a configuration of the onboard device according to the embodiment.

### DESCRIPTION OF EMBODIMENTS

An anti-vibration support structure for an onboard device according to an embodiment will now be described with reference to the drawings. In the following description, like or corresponding parts in the drawings are denoted by like reference numerals, and a description thereof will not be repeated.

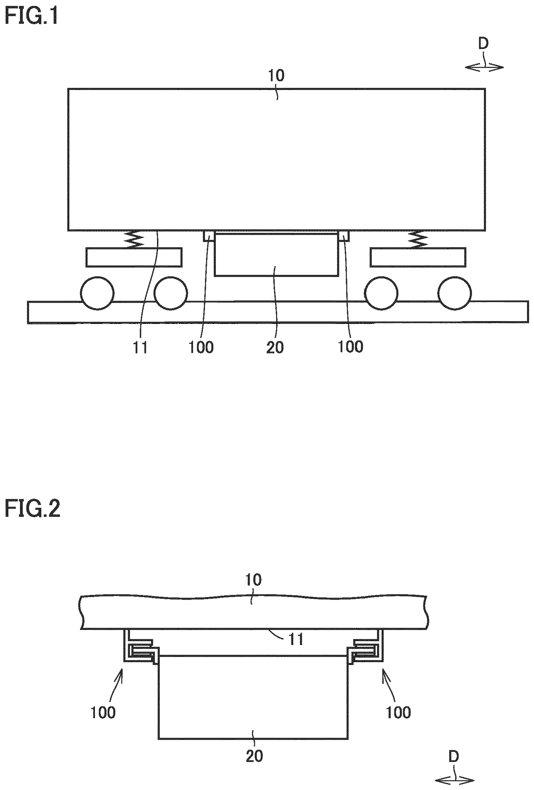

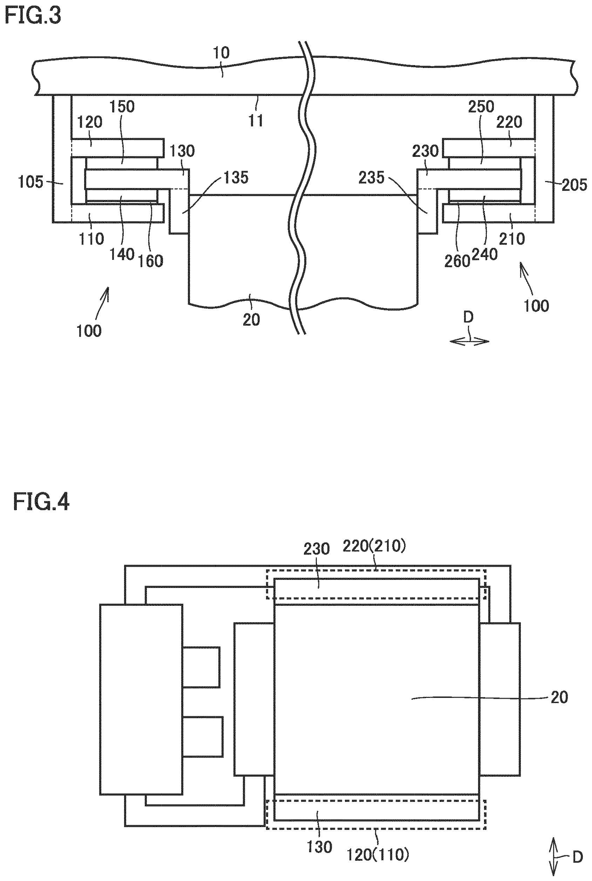

Fig. 1 is a schematic side view of a vehicle and an onboard device supported by an anti-vibration support structure for an onboard device. Fig. 2 is a schematic side view of the anti-vibration support structure for an onboard device according to the embodiment. Fig. 3 is an enlarged side view of a configuration of the anti-vibration support structure for an onboard device according to the embodiment. Fig. 4 is a plan view showing a configuration of the onboard device according to the embodiment. In Fig. 4, a vehicle is not shown.

As shown in Figs. 1 and 2, an anti-vibration support structure for an onboard device 100 according to an embodiment is for a vehicle 10 to support an onboard device 20 placed under the floor of the vehicle.

Specifically, vehicle 10 is a railroad vehicle. Vehicle 10 has a floor structure 11. In other words, "under the floor of vehicle 10" refers to "under floor structure 11". Floor structure 11 forms at least part of the floor surface of a passenger compartment of vehicle 10.

Although a specific device type of onboard device 20 is not particularly limited, onboard device 20 is specifically an on-board transformer in the present embodiment.

Onboard device 20 causes mechanical vibrations. The mechanical vibrations may make the passenger in the passenger compartment uncomfortable as such mechanical vibrations propagate directly to floor structure 11. In other cases, sound waves generated by the mechanical vibrations of onboard device 20 may make the passenger uncomfortable as the sound waves propagate to the passenger in the passenger compartment via floor structure 11. Thus, if mechanical vibrations of onboard device 20 are caused, anti-vibration support structure for an onboard device 100 preferably reduces the propagation of such vibrations to vehicle 10 as much as possible.

As shown in Fig. 3, anti-vibration support structure for an onboard device 100 according to the present embodiment includes a first support 110, a second support 120, a target support 130, a first elastic member 140, a second elastic member 150, and a spacer 160.

Anti-vibration support structure for an onboard device 100 according to the present embodiment further includes a support body 105 located under the floor of vehicle 10. Support body 105 is connected directly to vehicle 10. Specifically, support body 105 is connected directly to floor structure 11 of vehicle 10. Support body 105 extends vertically.

First support 110 is located under the floor of vehicle 10 and is fixed to vehicle 10. First support 110 extends at least in part horizontally. In the present embodiment, the entire first support 110 extends horizontally. First support 110 extends from support body 105 to one side in a travel direction D of vehicle 10. In other words, first support 110 is connected and fixed to vehicle 10 via support body 105. First support 110 may extend from support body 105 in a direction crossing travel direction D of vehicle 10.

Second support 120 is located under the floor of vehicle 10 and is fixed to vehicle 10. Second support 120 is located above first support 110 while being apart from first support 110. In the present embodiment, second support 120 extends horizontally. Second support 120 extends along first support 110 from support body 105 to one side in travel direction D of vehicle 10. In other words, second support 120 is connected and fixed to vehicle 10 via support body 105. Second support 120 may be connected and fixed to vehicle 10 via a member different from support body 105.

As shown in Fig. 4, each of first support 110 and second support 120 extends uniformly in the direction perpendicular to the direction of extension of first support 110 (in the present embodiment, travel direction D of vehicle 10), as viewed vertically. Although the material for each of support body 105, first support 110, and second support 120 is not particularly limited, it may be, for example, stainless steel or aluminum alloy.

As shown in Fig. 3, target support 130 is fixed to onboard device 20. Target support 130 is located at least in part between first support 110 and second support 120 so as not to be in contact with first support 110 and second support 120. In the present embodiment, target support 130 extends horizontally. Target support 130 is located above onboard device 20.

Anti-vibration support structure for an onboard device 100 according to the present embodiment further includes a suspension 135. Suspension 135 extends downward from a portion of target support 130 which is not located between first support 110 and second support 120. Suspension 135 is connected to a side surface of onboard device 20 on the side opposite to the first support 110 side, as viewed vertically. Suspension 135 is connected to the side surface of onboard device 20 by, for example, welding. Specifically, target support 130 is connected and fixed to onboard device 20 via suspension 135.

As shown in Fig. 4, target support 130 extends uniformly in the direction perpendicular to the direction of extension of first support 110 (in the present embodiment, travel direction D of vehicle 10), as viewed vertically. Anti-vibration support structure for an onboard device 100 may also include a plurality of target supports 130 as target support 130, and when anti-vibration support structure for an onboard device 100 includes a plurality of target supports 130, target supports 130 are placed adjacent to each other in the direction perpendicular to the direction of extension of first support 110 (in the present embodiment, travel direction D of vehicle 10). Although the material for each of target support 130 and suspension 135 is not particularly limited, it may be stainless steel or coated steel.

As shown in Fig. 3, first elastic member 140 is located between first support 110 and target support 130. In the present embodiment, first elastic member 140 has an outer shape of a flat board extending horizontally. First elastic member 140 may be located as a plurality of first elastic members 140 between first support 110 and target support 130. In this case, first elastic members 140 may be placed, for example, adjacent to each other horizontally.

In the present embodiment, first elastic member 140 is vertically in direct contact with target support 130. First elastic member 140 may be vertically adjacent to target support 130 via a spacer similar to spacer 160, which will be described below.

Although first elastic member 140 is not vertically in direct contact with first support 110 in the present embodiment, first elastic member 140 may be vertically in direct contact with first support 110.

Second elastic member 150 is located between second support 120 and target support 130. In the present embodiment, second elastic member 150 has an outer shape of a flat board extending horizontally. Second elastic member 150 may be located as a plurality of second elastic members 150 between second support 120 and target support 130. In this case, second elastic members 150 may be placed adjacent to each other horizontally.

In the present embodiment, second elastic member 150 is vertically in direct contact with target support 130. In the present embodiment, second elastic member 150 is vertically adjacent to second support 120. Second elastic member 150 may be vertically adjacent to target support 130 or adjacent to second support 120 via a spacer similar to spacer 160 described below.

First elastic member 140 and second elastic member 150 are each made of a rubber composite. A rubber component included in the rubber composite is not particularly limited. The rubber composite may include, for example, natural rubber, styrene-butadiene rubber, isoprene rubber, butadiene rubber, nitrile rubber, butyl rubber, or the like. First elastic member 140 made of the rubber composite is not bonded by vulcanization to each of target support 130, second elastic member 150, and spacer 160, and second elastic member 150 made of the rubber composite is not bonded by vulcanization to each of target support 130, first elastic member 140, and spacer 160.

Spacer 160 is retained between first support 110 and second support 120 together with target support 130, first elastic member 140, and second elastic member 150. In the present embodiment, specifically, spacer 160 is vertically located between first support 110 and first elastic member 140 and is adjacent to each of first support 110 and first elastic member 140.

Spacer 160 may be located at a position different from the above-mentioned position between first support 110 and second support 120. For example, spacer 160 may be vertically located between target support 130 and first elastic member 140 and be adjacent to each of target support 130 and first elastic member 140. Spacer 160 may be vertically located between target support 130 and second elastic member 150 and be adjacent to each of target support 130 and second elastic member 150. Spacer 160 may be vertically located between second elastic member 150 and second support 120 and be adjacent to each of second elastic member 150 and second support 120.

Although the material for spacer 160 is not particularly limited, it may be, for example, stainless steel.

Thus, target support 130 is retained between first support 110 and second support 120 at least via first elastic member 140 and second elastic member 150, and accordingly, is supported without a fastening member such as a bolt.

As shown in Fig. 3, anti-vibration support structure for an onboard device 100 according to the present embodiment also includes a support body 205, a first support 210, a second support 220, a target support 230, a suspension 235, a first elastic member 240, a second elastic member 250, and a spacer 260. Support body 205, first support 210, second support 220, target support 230, suspension 235, first elastic member 240, second elastic member 250, and spacer 260 may be configured similarly to, and may be positioned with respect to vehicle 10 and onboard device 20 similarly to, support body 105, first support 110, second support 120, target support 130, suspension 135, first elastic member 140, second elastic member 150, and spacer 160, respectively.

As viewed from the direction perpendicular to the direction in which first support 110 or second support 120 extends from support body 105 (in the present embodiment, the direction along travel direction D of vehicle 10), support body 205, first support 210, and second support 220 are located line-symmetrically to support body 105, first support 110, and second support 120, respectively, about the same central axis with the vertical direction as the axial direction. Also, as viewed from the direction in which first support 110 or second support 120 extends from support body 105 (in the present embodiment, the direction along travel direction D of vehicle 10), target support 230 and suspension 235 are located line-symmetrically to target support 130 and suspension 135, respectively, about the central axis of onboard device 20 with the vertical direction as the axial direction.

Next, a method of manufacturing anti-vibration support structure for an onboard device 100 according to the present embodiment will be described. The method of manufacturing anti-vibration support structure for an onboard device 100 according to the present embodiment includes a target support placement step and a spacer placement step.

In the target support placement step, each of at least a part of target support 130, first elastic member 140, and second elastic member 150 is placed between first support 110 and second support 120. In the present embodiment, first support 110 and second support 120 extend from support body 105 in travel direction D, as shown in Fig. 3. Thus, target support 130 is inserted between first support 110 and second support 120 from the direction perpendicular to travel direction D of vehicle 10, that is, from the side of vehicle 10, as shown in Fig. 4.

In the target support placement step, each of at least a part of target support 230, first elastic member 240, and second elastic member 250 is placed between first support 210 and second support 220, in a manner similar to that of placing at least a part of target support 130, first elastic member 140, and second elastic member 150.

In the spacer placement step, spacer 160 is hammered between first support 110 and second support 120. In the present embodiment, spacer 160 is hammered between first support 110 and first elastic member 140, as shown in Fig. 3. Thus, first elastic member 140 and second elastic member 150 are adjacent to any other member while being vertically compressed, so that target support 130 can be supported more firmly by first support 110 and second support 120 via first elastic member 140 and second elastic member 150. In placement of spacer 160, onboard device 20 fixed to target support 130 is preferably being lifted with, for example, a hydraulic jack. It suffices that spacer 260 is placed between first support 210 and second support 220, similarly to spacer 160.

Through the above steps, anti-vibration support structure for an onboard device 100 according to the present embodiment can be manufactured.

As described above, anti-vibration support structure for an onboard device 100 according to the present embodiment is for vehicle 10 to support onboard device 20 placed under the floor of the vehicle. Anti-vibration support structure for an onboard device 100 includes first support 110, second support 120, target support 130, first elastic member 140, and second elastic member 150. First support 110 is located under the floor of vehicle 10 and is fixed to vehicle 10. First support 110 extends at least in part horizontally. Second support 120 is located under the floor of vehicle 10 and is fixed to vehicle 10. Second support 120 is located above first support 110 while being apart from first support 110. Target support 130 is fixed to onboard device 20. Target support 130 is located at least in part between first support 110 and second support 120 so as not to be in contact with first support 110 and second support 120. First elastic member 140 is located between first support 110 and target support 130. Second elastic member 150 is located between second support 120 and target support 130. Target support 130 is supported by being retained between first support 110 and second support 120 at least via first elastic member 140 and second elastic

member 150.

Thus, target support 130 can be supported by first support 110 and second support 120 via first elastic member 140 and second elastic member 150 without necessarily using a fastening member such as a bolt. Therefore, anti-vibration support structure for an onboard device 100 has anti-vibration performance owing to first elastic member 140 and second elastic member 150 and can be simplified in terms of structure and assembly.

Anti-vibration support structure for an onboard device 100 according to the present embodiment further includes spacer 160. Spacer 160 is retained between first support 110 and second support 120 together with target support 130, first elastic member 140, and second elastic member 150.

Thus, first elastic member 140 and second elastic member 150 are compressed vertically, thereby fixing target support 130 more firmly by first support 110 and second support 120.

In the present embodiment, first elastic member 140 and second elastic member 150 are each made of a rubber composite. First elastic member 140 is not bonded by vulcanization to each of target support 130 and second elastic member 150, and second elastic member 150 is not bonded by vulcanization to each of target support 130 and first elastic member 140.

This simplifies the structure and assembly of anti-vibration support structure for an onboard device 100 because the integration and vulcanization bonding steps of each member associated with cure bonding can be omitted.

It should be understood that the embodiment disclosed herein is illustrative and non-restrictive in every respect. The scope of the present disclosure is defined by the claims rather than the above description and is intended to encompass any modifications within the scope and meaning equivalent to the terms of the claims.

### REFERENCE SIGNS LIST

10 vehicle; 11 floor structure; 20 onboard device; 100 anti-vibration support structure for onboard device; 105, 205 support body; 110, 210 first support; 120, 220 second support; 130, 230 target support; 135, 235 suspension; 140, 240 first elastic member; 150, 250 second elastic member; 160, 260 spacer.

## Claims

1. An anti-vibration support structure for an onboard device, which is for a vehicle (10) to support an onboard device (20) placed under a floor of the vehicle (10), the anti-vibration support structure for an onboard device (100) comprising:
a first support (110) suitable to be located under the floor of the vehicle (10), suitable to be fixed to the vehicle (10), and extending at least in part horizontally;
a second support (120) suitable to be located under the floor of the vehicle (10), suitable to be fixed to the vehicle (10), and suitable to be located above the first support (110) while being apart from the first support (110);
a target support (130) suitable to be fixed to the onboard device (20), and being located at least in part between the first support (110) and the second support (120) so as not to be in contact with the first support (110) and the second support (120);
a first elastic member (140) being located between the first support (110) and the target support (130); and
a second elastic member (150) being located between the second support (120) and the target support (130),
wherein the target support (130) is supported by being retained between the first support (110) and the second support (120) at least via the first elastic member (140) and the second elastic member (150).

2. The anti-vibration support structure for an onboard device according to claim 1, further comprising a spacer (160) retained between the first support (110) and the second support (120) together with the target support (130), the first elastic member (140), and the second elastic member (150).

3. The anti-vibration support structure for an onboard device according to claim 1 or 2, wherein
the first elastic member (140) and the second elastic member (150) are each made of a rubber composite, and
the first elastic member (140) is not bonded by vulcanization to each of the target support (130) and the second elastic member (150), and the second elastic member (150) is not bonded by vulcanization to each of the target support (130) and the first elastic member (140).

4. An onboard device supported on the vehicle (10) with an anti-vibration support structure for an onboard device (100) according to any one of claims 1 to 3.

5. The onboard device according to claim 4, which is a transformer.

## Patentansprüche

1. Schwingungsdämpfende Stützstruktur für eine Bordvorrichtung, die für ein Fahrzeug (10) ist, um eine Bordvorrichtung (20) zu tragen, die unter einem Boden des Fahrzeugs (10) platziert ist, wobei die schwingungsdämpfende Stützstruktur für eine Bordvorrichtung (100) aufweist:
eine erste Stütze (110), die geeignet ist, unter dem Boden des Fahrzeugs (10) lokalisiert zu werden, die dazu geeignet ist, an dem Fahrzeug (10) befestigt zu werden, und die sich zumindest teilweise horizontal erstreckt;
eine zweite Stütze (120), die dazu geeignet ist, unter dem Boden des Fahrzeugs (10) lokalisiert zu werden, die dazu geeignet ist, an dem Fahrzeug (10) befestigt zu werden, und die dazu geeignet ist, oberhalb der ersten Stütze (110) lokalisiert zu werden, während sie von der ersten Stütze (110) entfernt ist;
eine Zielstütze (130), die dazu geeignet ist, an der Bordvorrichtung (20) befestigt zu werden, und die zumindest teilweise zwischen der ersten Stütze (110) und der zweiten Stütze (120) lokalisiert ist, um nicht mit der ersten Stütze (110) und der zweiten Stütze (120) in Kontakt zu sein;
ein erstes elastisches Glied (140), das zwischen der ersten Stütze (110) und der Zielstütze (130) lokalisiert ist; und
ein zweites elastisches Glied (150), das zwischen der zweiten Stütze (120) und der Zielstütze (130) lokalisiert ist,
wobei die Zielstütze (130) gehalten wird, indem sie zwischen der ersten Stütze (110) und der zweiten Stütze (120) zumindest über das erste elastische Glied (140) und das zweite elastische Glied (150) gehalten wird.

2. Schwingungsdämpfende Stützstruktur für eine Bordvorrichtung gemäß Anspruch 1, die ferner einen Abstandshalter (160) aufweist, der zwischen der ersten Stütze (110) und der zweiten Stütze (120) zusammen mit der Zielstütze (130), dem ersten elastischen Glied (140) und dem zweiten elastischen Glied (150) gehalten wird.

3. Schwingungsdämpfende Stützstruktur für eine Bordvorrichtung gemäß Anspruch 1 oder 2, wobei
das erste elastische Glied (140) und das zweite elastische Glied (150) jeweils aus einem Gummigemisch hergestellt sind, und
das erste elastische Glied (140) nicht durch eine Vulkanisation sowohl mit der Zielstütze (130) als auch mit dem zweiten elastischen Glied (150) verbunden ist, und das zweite elastische Glied (150) nicht durch eine Vulkanisation sowohl mit der Zielstütze (130) als auch dem ersten elastischen Glied (140) verbunden ist.

4. Bordvorrichtung, die an dem Fahrzeug (10) mit einer schwingungsdämpfenden Stützstruktur für eine Bordvorrichtung (100) gemäß einem der Ansprüche 1 bis 3 gehalten wird.

5. Bordvorrichtung nach Anspruch 4, die ein Transformator ist.

## Revendications

1. Structure de support anti-vibration pour un dispositif embarqué, qui est pour un véhicule (10), pour supporter un dispositif embarqué (20) placé en dessous d'un plancher du véhicule (10), la structure de support anti-vibration pour un dispositif embarqué (100) comprenant :
un premier support (110) approprié pour être positionné en dessous du plancher du véhicule (10), approprié pour être fixé au véhicule (10), et s'étendant au moins en partie horizontalement ;
un second support (120) approprié pour être positionné en dessous du plancher du véhicule (10), approprié pour être fixé au véhicule (10), et approprié pour être positionné au-dessus du premier support (110) tout en étant espacé du premier support (110) ;
un support cible (130) approprié pour être fixé au dispositif embarqué (20), et positionné au moins en partie entre le premier support (110) et le second support (120) afin de ne pas être en contact avec le premier support (110) et le second support (120) ;
un premier élément élastique (140) positionné entre le premier support (110) et le support cible (130) ; et
un second élément élastique (150) positionné entre le second support (120) et le support cible (130),
dans laquelle le support cible (130) est supporté en étant retenu entre le premier support (110) et le second support (120) au moins par l'intermédiaire du premier élément élastique (140) et du second élément élastique (150).

2. Structure de support anti-vibration pour an dispositif embarqué selon la revendication 1, comprenant en outre une entretoise (160) retenue entre le premier support (110) et le second support (120) conjointement avec le support cible (130), le premier élément élastique (140), et le second élément élastique (150).

3. Structure de support anti-vibration pour an dispositif embarqué selon la revendication 1 ou 2, dans laquelle
le premier élément élastique (140) et le second élément élastique (150) sont chacun faits d'un composite caoutchouc, e
le premier élément élastique (140) n'est pas lié par vulcanisation à chacun du support cible (130) et du second élément élastique (150), et le second élément élastique (150) n'est pas lié par vulcanisation à chacun du support cible (130) et du premier élément élastique (140).

4. Dispositif embarqué supporté sur le véhicule (10) avec une structure de support anti-vibration pour un dispositif embarqué (100) selon l'une quelconque des revendications 1 à 3.

5. Dispositif embarqué selon la revendication 4, qui est un transformateur.
